# EUROPÄISCHE PATENTSCHRIFT

(11) **EP 0 752 946 B1**
(45) Veröffentlichungstag und Bekanntmachung des Hinweises auf die Patenterteilung: **16.02.2000**
(21) Anmeldenummer: 95913871.0
(22) Anmeldetag: 30.03.1995
(51) Int. Cl.: B62D 12/00, B62D 47/02

(54) **LENK- UND STEUERUNGSSYSTEM FÜR MEHRGLIEDRIGE, NICHT SPURGEBUNDENE, AUTOMATISCH TRENN- UND KOPPELBARE, ZUGVERBÄNDE**
STEERING AND CONTROL SYSTEM FOR MULTI-UNIT, NON-RAILBORNE, AUTOMATICALLY COUPLABLE AND UNCOUPLABLE TRAINS
SYSTEME DE GUIDAGE ET DE COMMANDE DESTINE A DES RAMES DE TRAINS A ELEMENTS MULTIPLES, NON GUIDEES SUR DES RAILS, POUVANT ETRE ACCOUPLEES ET DESACCOUPLEES AUTOMATIQUEMENT

(30) Priorität: 31.03.1994 DE 4411241
(43) Veröffentlichungstag der Anmeldung: 15.01.1997
(73) Patentinhaber: Fuhr, Fred, 65207 Wiesbaden (DE)
(72) Erfinder: Fuhr, Fred, 65207 Wiesbaden (DE)
(74) Vertreter: Quermann, Helmut, Dipl.-Ing.
(86) Internationale Anmeldenummer: DE9500428
(87) Internationale Veröffentlichungsnummer: WO9526898

(56) Entgegenhaltungen:
- EP-A- 0 069 107
- FR-A- 2 549 436

## Beschreibung

Die Erfindung betrifft ein Transportsystem, das ohne fahrbahngebundene Spurführungen im Personen- und im Güter-Verkehr als beliebig langer Zugverband auf dazu freigegebenen Fahrbahnen und auch aufgelöst zu kurzen Transport-Einheiten, die für den öffentlichen Straßenverkehrzugelassen sind, eingesetzt werden kann.
Ein solches Transportsystem vereinigt die gleichzeitige Nutzung der hohen und pünktlichen Verkehrsleistung von langen Zugverbänden auf eigenen Fahrbahnen mit der Nutzung der öffentlichen Fahrwege, die zur Erreichung aller Transportziele gefordert ist.

Im Güternah- und Fernverkehr kann hierdurch ohne zeit- und kostentreibende Frachtumladung sowohl im Zugverband auf reservierten Strecken - wie stillgelegten und umgebauten Bahnlinien - als auch aufgeteilt in kleinen Transporteinheiten fahrend jeder Frachtaufgabeort mit jedem Frachtzielort verbunden werden.

Im Personenverkehr kann, zum Umsteigen auf eine abzweigende Linie eines fahrenden Zugverbandes, durch einen Platzwechsel innerhalb des Verbandes jeder Zielpunkt des öffentlichen Verkehrsnetzes erreicht werden. Es können zwei und mehr Zuglinien automatisch und im Fahren zu einem Zugverband zusammengefaßt und auch wieder aufgelöst werden, um Fahrgästen mit unterschiedlichen Fahrtzielen ein weitgefächertes Streckennetz ohne einen externen Zugwechsel anbieten zu können.
Straßenfahrzeuge, die aus mehreren gekoppelten Einheiten bestehen, sind als spurgeführte Systeme in vielfältig vorgeschlagenen Ausführungen bekannt und zum Teil auch im Einsatz. Beispiele hierzu sind aus den Offenlegungsschriften 25 33 799, 26 36 656, 26 22 778 und aus einem in Belgien im Einsatz befindlichen mehrgliedrigen Straßenbus bekannt.
Die Nachteile dieser Systeme ergeben sich aus den fahrbahngebundenen Fahrzeugführungen, die eine freie Streckenwahl als langen Zugverband nicht zulassen und aus den zentral in den Fahrzeug-Längsachsen angeordneten Fahrzeugkopplungen, die ein aktives, spurgenaues Lenken der Fahrzeugeinheiten nicht ermöglichen.

Aus der FR-A-25 49 436 ist ein nicht spurgeführtes Straßenfahrzeug bekannt. Dieses besteht aus mindestens zwei einachsigen Fahrzeugeinheiten und einer einachsigen Verbindungseinheit. Diese Einheiten sind durch starre und durch hydraulische Elemente gelenkig miteinander verbunden. Die zentral angeordneten Elemente sind als starre Kupplungsstangen fest an den Fahrzeugeinheiten und gelenkig an den Verbindungseinheiten angeschlossen. Die hydraulischen Elemente bestehen aus Zylindereinheiten, deren Druckkammern über Hydraulikleitungen diagonal miteinander verbunden sind. Mit dieser Verbindung wird sichergestellt, daß die unstabilen einachsigen Einheiten in einer stabilen Lage gehalten werden und, daß in Kurven und Gefällen die Winkelabweichungen vor und hinter den Verbindungseinheiten immer die gleichen Werte einhalten. Eine hydraulische Trennung ist nicht möglich, da die einachsigen Verbindungseinheiten ohne einen beidseitigen Anschluß instabil sind. Das Straßenfahrzeug kann nicht aufgelöst werden, dahingehend, daß die einzelnen Fahrzeugeinheiten unabhängig voneinander fahren können. Das Straßenfahrzeug weist keine Zwangssteuerung durch Hubarme als primäres Lenksystem auf, das Voraussetzung für ein spurgenaues Fahren im Verband ist und überdies ohne eine Hydraulikverbindung zwischen den Fahrzeugeinheiten arbeitet.

Es ist Aufgabe der Erfindung, eine Fahrzeugsteuerung zu schaffen, die als Zugverband ohne jede fahrbahngebundene Führung beliebig viele hintereinander gekoppelte Fahrzeugeinheiten so steuert, daß die von der Fahrzeug- Kopfeinheit vorgegebene Fahrtrichtung von allen angekoppelten Fahrzeugeinheiten spurgenau nachvollzogen wird, daß hierzu lenkbare Radsätze in den Fahrzeugeinheiten nicht bzw. nur untergeordnet erforderlich sind, daß die Steuerung durch Hubbewegungen von jeweils zwei getrennt wirkenden und mit entsprechendem Abstand zueinander angeordneten Wagenkopplungen erfolgt, daß jede der gekoppelten Fahrzeug-Einheiten als ein selbständig zu fahrendes Fahrzeug ausgerüstet ist, daß beide Stirnseiten dieser Fahrzeug-Einheiten mit einer Schiebe- oder Falttür so ausgebildet sind, daß auch im fahrenden Zugverband ein durchgehender Übergang zwischen den Fahrzeugeinheiten gegeben ist, und daß mit den parallel auszufahrenden Kopplungsarmen, die sich selbststeuernd mit dem Gegenfahrzeug koppeln und entkoppeln, ein beliebiges Trennen und Verbinden des Zugverbandes im Fahren durchgeführt werden kann.
Mit der Doppelarmkopplung und der Drehpunktanordnung an den stirnseitigen Fahrzeug-Seitenkanten wird auch im Frachtverkehr eine lückenlose Fahrzeugkopplung erreicht, so daß energieraubende Luftverwirbelungen, die zwischen im Abstand gekoppelten Waggons oder Fahrzeugeinheiten entstehen, nicht auftreten.

Die Fahrzeugsteuerung in Kurven läuft beispielsweise für den gesamten Fahrzeugverband wie folgt ab:
Mit der manuellen Steuerung der Fahrzeug-Kopfeinheit (1) werden alle zur Kurvenfahrt erforderlichen Bewegungen wie Hubweg (27) und Winkelausschlag (28) der Kopplungsarme (14/15) und (25/26) vorgegeben. Durch eine elektronische Programmerfassung werden diese mechanisch vorgegebenen Bewegungsabläufe in dem mitgeführten Mikroprozessorzur automatischen Steuerung der nachgeschalteten Fahrzeugeinheiten erfaßt. Eine aus der Eigenprogrammierung in der Robotersteuerung bekannte Nachführtechnik.

Der wegstrecken-abhängige Bewegungsablauf für die Kopplungsarme aller der Fahrzeug-Kopfeinheit nachgeschalteten Fahrzeugeinheiten wird wie folgt sichergestellt:
Synchron zur Speicherung der Bewegungsabläufe aus der Fahrzeug-Kopfeinheit wird der Verlauf der mit der Fahrzeug-Mittellinie in der Kurve zurückgelegten Wegstrecke mit einem über Fahrbahnkontakt angetriebenen Meßrad (20) aufgenommen und gleichzeitig zur automatischen Steuerung der nachgeschalteten Fahrzeugeinheiten gespeichert.
Jede der der Fahrzeug-Kopfeinheit (1) folgende Zugeinheit hat ein eigenes Streckenmeßrad (20), das mit dem Beginn der Lenkungsabläufe durch die Fahrzeug-Kopfeinheit die eigene Länge (29) bzw. zusätzlich die Summe (30) der vorgekoppelten Wagenlängen als erforderliche Wegstrecke bis zum Nachvoltzug der in der Fahrzeug-Kopfeinheit (1) gespeicherten Bewegungsabläufe zählt.
Hiermit wird sichergestellt, daß jede der der Fahrzeug-Kopfeinheit (1) folgenden Fahrzeugeinheiten an der gleichen Streckenposition (31) einen zur Fahrzeug-Kopfeinheit absolut synchron verlaufenden Kurvenradius nachvollzieht und der gesamte Zugverband so, sich selbststeuernd, dem Streckenverlauf spurstabil folgt. Von der Fahrzeug-Kopfeinheit wird jede neu eingeleitete Kurve gesondert aufgenommen und synchron hierzu die Wegstrecke neu erfaßt. Ein Löschen der gespeicherten Werte erfolgt, sobald die letzte Fahrzeug-Einheit die Kurve nachvollzogen hat. Analog hierzu wird mit den von den Fahrzeug-Einheiten erfaßten Strecken-Meßwerten verfahren.
Unabhängig von den über ein mechanisch angetriebenes Meßrad erfaßten und gesteuerten Wegstreckendaten kann die zurückgelegte Wegstrecke in Zeitabschnitten, in Verbindung mit der zeitgleich gefahrenen Geschwindigkeit erfaßt werden.
Jeder in Sekundenwerte aufgeteilte Zeitabschnitt steht für einen Bewegungsablauf der Kopplungsarme in der Kurve. Eine sich verändernde Zuggeschwindigkeit wird von einem Rechner in eine Korrektur für den Zeitablauf zur Steuerung der Kopplungsarme umgesetzt. Hiermit ist eine gesicherte, spurgenaue Zugführung ohne einen gesonderten Fahrbahnkontakt erreicht.

Um Reaktionskräfte (32), die bei langen Zugverbänden zur Radiusmitte hin wirksam werden und ein Ausweichen aus der Spurlinie (33) bewirken, zu verhindern, werden die Zug- und Druckkräfte an den Wagenkopplungen fortlaufend mit vorgegebenen Sollwerten verglichen. Bei Überschreitung der zugelassenen Tolerenzbreite werden die Antriebe der entsprechenden Fahrzeugeinheiten über den eigenen Tempomat aktiviert, um in allen Fahrsituationen ein Ausbrechen aus der Spurlinie (33) zu verhindern. Weiterhin wird durch das automatische Überwachen und Steuern der einzelnen Antriebe erreicht, daß im Zugverband keine durchlaufenden Zug- und Druckkräfte aufzunehmen sind und dadurch die im LKW- und Omnibusbau erreichten Leichtkonstruktionen auch für die Verbandszugeinheiten nutzbar sind.
Im Zugverband auf gesonderten Fahrwegen werden die im öffentlichen Straßenverkehr gegebenen engen Kurven nicht gefahren, sondern nur Bogen mit großen Radien, die der Führung von Autobahnen oder den Radien von Schienenwegen vergleichbar sind. Hierdurch wird erreicht, daß der gesamte Zugverband mit Aussnahme der Zugkopfeinheit (1) nur über die Hubarme (14/15) und (25/26) zu steuern ist und eine Lenkung derjeweils vorderen lenkbaren Radsätze (5) entfallen kann.
Die geringen Versatzbewegungen (34) der nicht gelenkten Radeinheiten erfolgen gleichzeitig mit den Raddrehungen, so daß auch im Kurvenverlauf kein stehendes Radieren zwischen Laufradfläche und Straßenbelag eintritt.
Der Ablauf der automatischen Kopplung der Fahrzeug-Einheiten erfolgt vom Fahrerstand (35) der an- oder abkoppelnden Fahrzeug-Einheit aus. Einzeln fahrende Einheiten werden hierbei, wie im Straßenverkehr vorgeschrieben, manuell überden Radsatz (5) und die fest verbundenen Hubeinheiten (14/15) gelenkt. Die vorderen Hubeinheiten (25/26) sind zum Teil ausgefahren und werden auf die Kupplungsmundstücke (37/38) der vorausfahrenden Fahrzeug-Einheit zugesteuert, bis bei gleichen Fahrzeuggeschwindigkeiten die Hubeinheiten zur Kopplung mit den Mundstücken voll ausfahren können. Ein möglicher Versatz in der Höhe wird manuell oder motorisch mit Infrarot-Steuerung über die höhenverstellbaren Radeinheiten (9) ausgeglichen. Nach erfolgter Kopplung werden die Fahrzeugeinheiten über die Hubeinheiten (25/26) lückenlos miteinander verbunden. Rundum verlaufende, stark verformbare Gummiprofile sichern in den schwach ausgeprägten Kurven der für das Verbandsfahren vorgesehenen Strecken einen geschlossenen Übergang zwischen den Fahrzeug-Stirnseiten (39) und (40), der im Bodenbereich durch eine ausfahrende Bodenplatte gebildet ist. Fahrzeug-Stirnseiten (44), die für hohe Geschwindigkeiten ausgelegt sind, erhalten eine entsprechende Neigung, zu der eine anzukoppelnde Fahrzeug-Heckseite (45) die gleiche Neigung erfordert, um eine lückenlose Zugverbindung sicherzustellen.

Der in Kurven benötigte Ausgleich im Fahrzeug-Übergang, der geschlossen bleiben muß, ist in eine senkrecht über dem Kopplungsarmen-Drehpunkt stehende elastische Verbindung (46) verlegt und ist Bestandteil der Fahrzeug-Heckpartie.
Die zur durchlaufenden Steuerung im Zugverband erforderlichen Steuerimpulse werden über selbsttätige Steckverbindungen (41), die in der Zugmittelachse angeordnet sind, weitergeleitet.

Im öffentlichen Straßenverkehr fahren die aus dem Zugverband gelösten Fahrzeug-Einheiten (3/4) als manuell gelenkte Straßenfahrzeuge, die gleichzeitig über den Radsatz (5) und die nicht lösbaren Hubeinheiten (14/15) gesteuert werden.
Mit dem Lenken von Radsatz (5) wird, wie auch im Zugverband fahrend, die zum Kurvenradius-Mittelpunkt hin angeordnete Hubeinheit (15/26) für den Hubweg gesperrt und die gegenüberliegende Hubeinheit (14/25) analog zum Radsatz (5) ausgefahren. Ein Übersteuern der Knickbewegung zwischen den Fahrzeugteilen (1/2) und (3/4) gegenüber dem Radeinschlag (5) ist durch die Zwangssteuerung der Hubarme, auch bei einem Schubantrieb durch den hinteren Fahrzeugteil (4), ausgeschlossen.
Im öffentlichen Straßenverkehr einzel fahrende Zugeinheiten entsprechen im Fahrverhalten den bekannten Gelenkbussen und im Zugverband den schienengebundenen Zügen mit einem durchgehenden Personendurchgang.
Im Frachtverkehr sind zum Be- und Entladen durchgehende Ladeflächen gegeben, die nach Wegschwenken des Fahrerstandes über die Stirnseiten und Rollbahnen einen durchlaufenden Ladeablaufzulassen. Überregionale Fahrwege für Zugverbände sind in allen Punkten mit Autobahnen vergleichbar.
Selbst hochbelastete Strecken kommen mit einer Fahrspur aus und lassen eine dichte Folge der Zugverbände zu, da systembedingt mit gleichbleibend hohen Geschwindigkeiten gefahren werden kann.
Die Mobilität und das Verhältnis von Verkehrsleistung zu Fahrwegsbedarf ist bei diesen spurfrei und teilbar zu fahrenden Zugverbänden gegenüber den bekannten Transportsystemen höher zu bewerten.

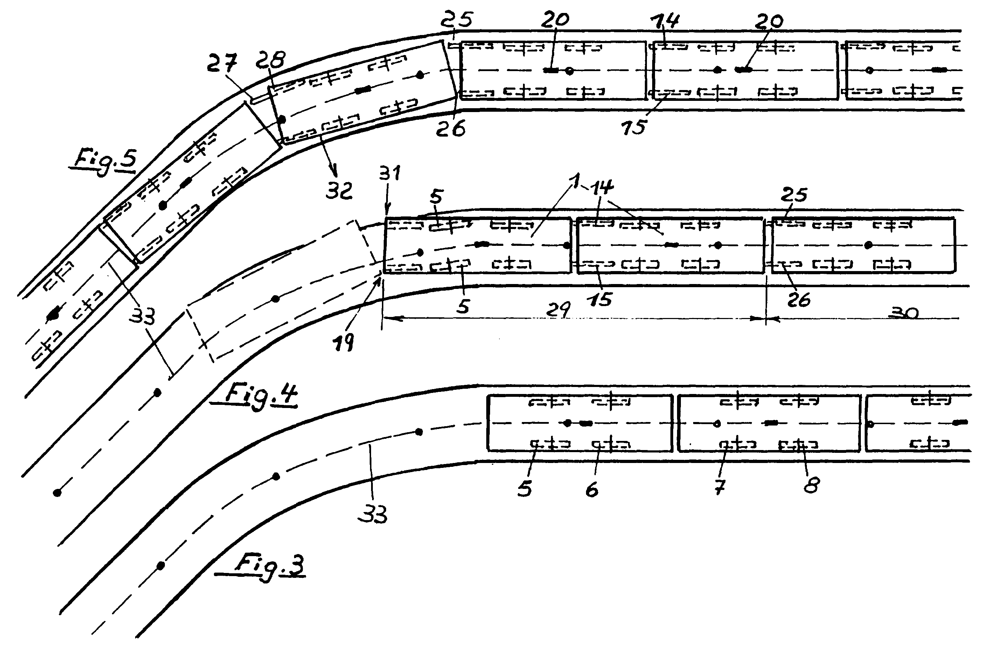

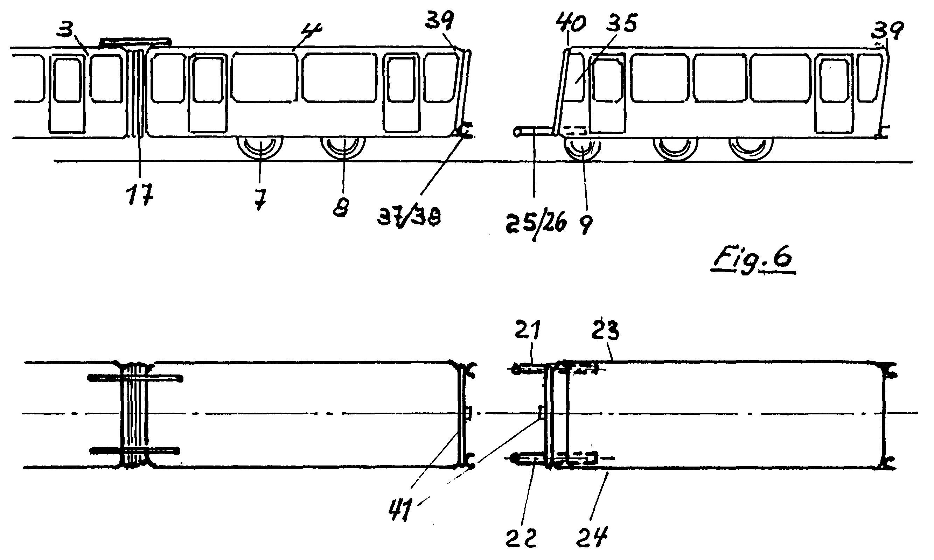

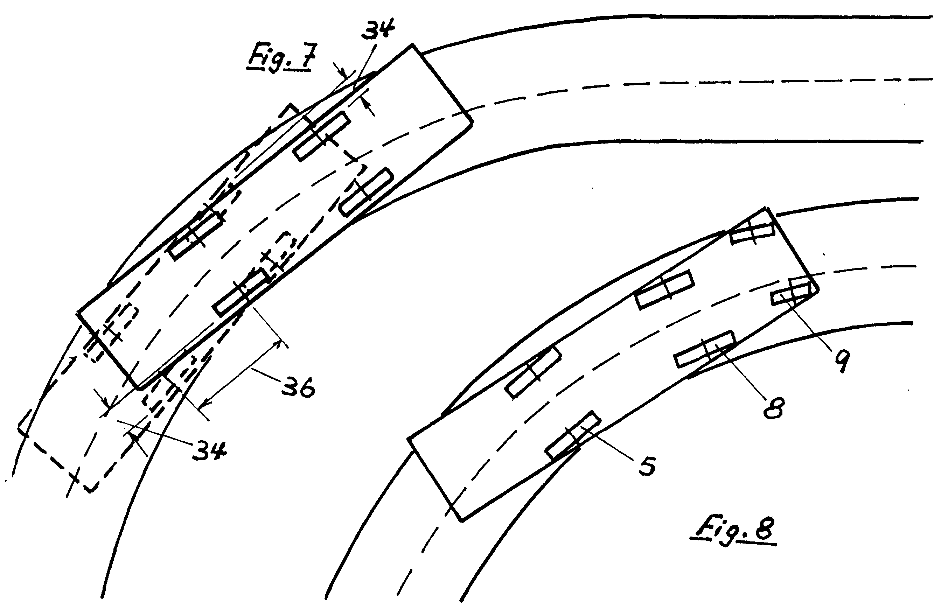

Die Fahrzeugeinheiten nach den Merkmalen der Erfindung sind in der Beschreibung, in den Figuren 1-8 und in den Patentansprüchen 1-11 dargestellt.
Es zeigt in
- Fig. 1: in der Seitenansicht eine zweigliedrige und eine angekoppelte eingliedrige Fahrzeug-Einheit mit drei Achsen,
- Fig. 2: den Fahrzeug-Heck- und Kopfbereich für Einheiten mit stark geneigtem Frontprofil,
- Fig. 3: in der Draufsicht einen Fahrzeugverband mit einer theoretischen Streckeneinteilung, die der Strecken-Mittellinie (33) folgt,
- Fig. 4: den Fahrzeugverband mit mit der Streckeneinteilung nach Fig. 3 im Beginn des Lenkeinschlages durch die Zug-Kopfeinheit,
- Fig. 5: den Fahrzeugverband noch Fig. 3, dem weiteren Lenkverlauf der Streckenführung folgend,
- Fig. 6: die Kopplungsarme zur automatischen Zugverbindung, parallel ausgefahren in der Seitenansicht und in einer Draufsicht,
- Fig. 7: den Radversatz (34) bei gleichzeitigem Radvorlauf (36) von nicht gelenkten Radeinheiten in einer Bogenfahrt,
- Fig. 8: eine einteilige Fahrzeug-Einheit, die in einer Kurvenfahrt von einem zum Lenkradsatz (5) mitlenkenden hinteren Radsatz (8) unterstützt wird; Analog hierzu lenken einzelfahrende zweiteilige Fahrzeug-Einheiten.

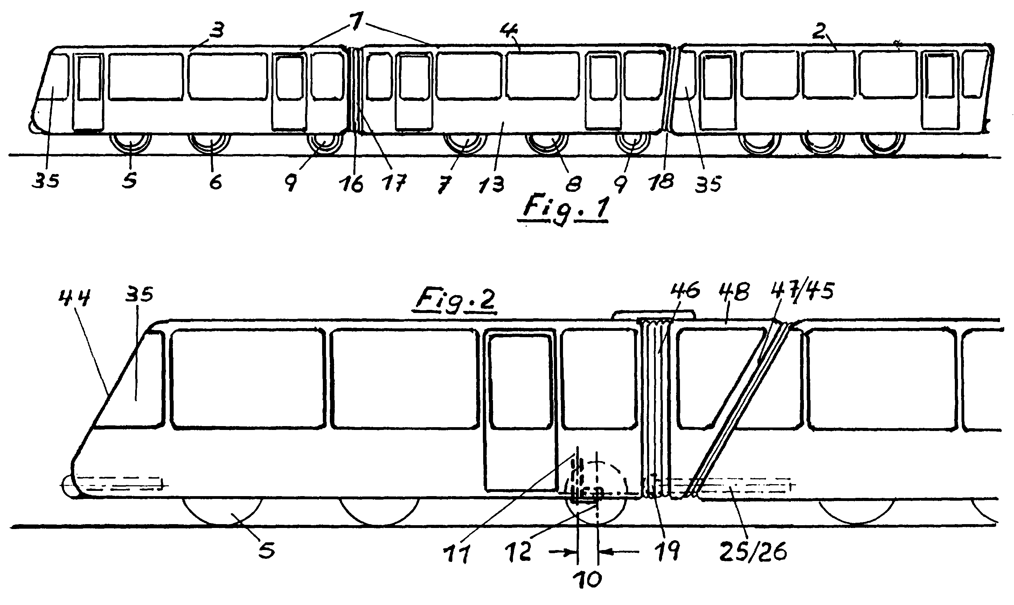

Die in Fig. 1 dargestellten Fahrzeug-Einheiten (1 und 2) bestehen aus zwei fest miteinander gekoppelten Fahrzeugzellen (3 und 4) und einer einzelligen Fahrzeug-Einheit. Beide Fahrzeugzellen oder Frachtwagen einer Fahrzeug-Einheit ruhen vorzugsweise aufzwei Achsen, die mit einem Bedarfsabstand zueinander zentral angeordnet sind.
Dreiachsige Einheiten für höhere Lasten werden im Zugverband nach dem gleichen System gesteuert. Kurze Einheiten für kleinere Kapazitäten bestehen aus einteiligen Fahrzeugzellen ohne Zwischengelenk.

Der vordere Radsatz (5) ist lenkbar, die Radsätze (6, 7, 8) erfordern keine Lenkung. Nach Fig. 8 ist für den Radsatz (8) zum Einsatz in engen Kurven parallel zu dem Radsatz (5) eine lenkbare Ausbildung vorgesehen.
Je nach Chassislänge und dem damit verbundenen Fahrzeugüberhang bis zum ersten Radsatz wird das Chassis durch begrenzt sekundär lenkende Radeinheiten (9) mitgetragen, um Nickbewegungen der Fahrzeugzellen abzufangen, und um die gleiche Niveauhöhe zwischen gekoppelten Einheiten zu sichern. Die Sekundärlenkung ergibt sich aus dem Versatz (10) zwischen der vertikalen Lenkachse (11) zur Radachse (12).

Die Begrenzung erfolgt durch Rückstellelemente, die sicherstellen, daß auch bei Rückwärtsfahrt die Radstellung in einem begrenzten Bereich zur Nullstellung gehalten wird und nicht umschlägt. Das Antriebsaggregat (13) ist vorzugsweise im Bereich der Radsätze (7 und 8) untergebracht. Die Chassis-Einheiten (3 und 4) sind zum aktiven Steuern durch zwei horizontal, wechselweise wirkende Hubeinheiten (14 und 15) verbunden und besitzen in der Passagier-Ausführung einen Übergang (16) und eine Zieharmonika-Verkleidung (17) in bekannter Form Die Verbindung (18) der Fahrzeug-Einheiten (1 und 2) miteinander ist lösbar und zur automatischen Fahrzeug-Kopplung ausgelegt. Mit der Anordnung der Kopplungsarme (25 und 26) an die Seiten (21 und 22) der Fahrzeug-Stirnseiten wird bei einem Lenkvorgang der Drehpunkt (19) um den die Fahrzeug-Einheiten zueinander schwenken, mit den Fahrzeug-Außenkanten (23 und 24) gleichgesetzt. Die Steuerung der Fahrzeug-Einheiten im Zugverband erfolgt durch die wahlweise Betätigung der Hubarmpaare so, daß die linke oder rechte Hubeinheit (14/15) und (25/26) geschlossen bleibt und den Drehpunkt bildet und die jeweils gegenüberliegenden Hubeinheiten programm-gesteuert den Hub (27) zum Lenkverlauf der Fahrzeug-Einheiten bestimmen.

### Bezugsziffern mit Sachwort-Bezeichnung

- 1: Zweiteilige Fahrzeug-Einheit, in Fig. 1 als Zug-Kopfeinheit
- 2: Einteilige Fahrzeug-Einheit
- 3: Vordere Fahrzeugzelle
- 4: Hintere Fahrzeugzelle
- 5: Lenkbarer Radsatz
- 6/7/8: Starre Radsätze
- 9: Sekundär-Radsätze
- 10: Achsen-Versatz
- 11: Lenkachse
- 12: Radachse
- 13: Antriebsaggregat
- 14/15: Feste Hubarme
- 16: Zug-Übergang
- 17: Zieharmonika-Verkleidung
- 18: Fahrzeugverbindung
- 19: Dreh- und Schwenkpunkt
- 20: Wegstrecken-Meßrad
- 21/22: Seitliche Position der Hubarme
- 23/24: Fahrzeug-Außenkanten
- 25/26: Koppelbare Hubarme
- 27: Hubweg der Arme
- 28: Winkelbogen der Arme
- 29: Wegstrecke einer Fahrzeug-Einheit
- 30: Summe einzelner Wegstrecken
- 31: Streckenposition für den Lenkeinsatz
- 32: Horizontale Reaktionsrichtung
- 33: Mittel- und Spurlinie
- 34: Rad- und Spurversatz
- 35: Fahrerstand
- 36: Rad-Vorlauf
- 37/38: Kupplungs-Mundstücke
- 39/40: Fahrzeug-Stirnseiten (Kopplungsseiten)
- 41: Steuer- Steckverbindung
- 42/43: Fest verbundene Stirnseiten
- 44/45: Geneigte Stirn- und Heckseiten
- 46: Schwenkausgleich in der Heckeinheit
- 47: Anschlußheck
- 48: Komplette Heckeinheit

## Patentansprüche

1. Lenk- und Steuerungssystem für mehrgliedrige, nicht spurgebundene, automatisch trenn- und koppelbare Zugverbände, wobei die einzelnen Fahrzeugeinheiten (1, 2, 3, 4) durch mit seitlichem Abstand angeordnete Hubarme miteinander verbunden sind und die Fahrtrichtung der den Hubarmen (14/15, 25/26) vorgespannten Fahrzeugeinheit mit dem wechselseitig steuerbaren Hubweg der Hubarme bestimmt wird, sowie die Hubwegsteuerung automatisch nach den Hubwegdaten der dem Zugverband vorgeschalteten, manuell geführten Kopfeinheiten (1) erfolgt, wobei die Hubwegdaten über einen Rechner erfaßt und gespeichert werden und nach dem Prinzip der rechnergesteuerten Nachführtechnik den nachfolgenden Fahrzeugeinheiten an der von den Fahrzeug-Kopfeinheiten vorgegebenen Streckenposition (31) als Steuerimpulse für die eigenen Hubarme übermittelt werden.

2. Lenk- und Steuerungssystem nach Anspruch 1, dadurch gekennzeichnet, daß der Ablauf der von den Hubarmen (14/15) der Fahrzeug-Kopfeinheiten (1) vorgegebenen Hub- und Winkelwerte (27 und 28) zeitgleich mit den von einem mitlaufenden Wegstrecken-Meßrad (20) aufgenommenen Werten in einem Rechnerzur Steuerung der nachgeschalteten Fahrzeug-Einheiten gespeichert wird.

3. Lenk- und Steuerungssystem nach Anspruch 1 und 2, dadurch gekennzeichnet, daß die einzelnen Fahrzeug-Einheiten mit einem Wegstrecken-Meßrad (20) ausgestattet sind, das die Summe der vorgeschalteten Fahrzeuglängen als Wegstrecke zwischen den jeweils eigenen Hubarmen und den Hubarmen der Kopfeinheit (1) aufnimmt und nach Durchfahren der zugeordneten Streckenlänge den Ablauf der Hubbewegungen zur Steuerung der eigenen Fahrzeug-Einheit aus dem Rechner der Zugkopf-Einheit abruft.

4. Lenk- und Steuerungssystem nach Anspruch 1, 2 und 3, dadurch gekennzeichnet, daß die Daten des Bewegungsablaufes der Hubarme in kurze Zeitabschnitte aufgeteilt und in Verbindung mit der zeitgleich gefahrenen Geschwindigkeit erfaßt werden und nach Durchfahren der als Zeitwert gespeicherten Fahrzeuglängen den Kurvenverlauf der nachgeschalteten Fahrzeug-Einheiten nachvollzieht und eine sich ändernde Zuggeschwindigkeit durch den Prozeßrechner korrigiert wird.

5. Lenk- und Steuerungssystem nach Anspruch 1, dadurch gekennzeichnet, daß die Fahrzeug-Einheiten aus ein- und aus zweiteiligen, selbstfahrenden Einheiten mit einem Fahrerstand und einem lenkbaren Radsatz bestehen, der beim Fahren im Zugverband ausgeschaltet ist, und daß die zwei- oder dreiachsigen Radsätze zentral angeordnet sind.

6. Lenk- und Steuerungssystem nach Anspruch 1 und 5, dadurch gekennzeichnet, daß die Fahrzeug-Einheiten zusätzlich im Bereich der Stirnseiten mit begrenzt sekundär lenkenden Radeinheiten so gestützt werden, daß Fahrzeug-Nickbewegungen ausgeschaltet bleiben, und daß mit einem vertikalen Hubweg der Radeinheiten (9) das automatische Koppeln der Fahrzeug-Einheiten ermöglicht wird.

7. Lenk- und Steuerungssystem nach Anspruch 1, 5 und 6, dadurch gekennzeichnet, daß die Fahrzeug-Einheiten an der vorderen Stirnseite ausfahrbare Kopplungsarme (25/26) besitzen und an der rückseitigen Stirnseite die entsprechenden Kupplungsmundstücke, und daß beide Elemente an den Seitenkanten der Stirnseiten so angeordnet sind, daß die Schwenkbewegung der gekoppelten Fahrzeug-Einheiten zur Kurveninnenseite hin bei anliegenden Fahrzeugkanten erfolgen kann.

8. Lenk- und Steuerungssystem nach Anspruch 1, 5, 6 und 7, dadurch gekennzeichnet, daß die Kopplungsarme (25/26) mit Meßdosen ausgerüstet sind, die im Verbandsfahren die Zug- und Druckkräfte zwischen den gekoppelten Fahrzeug-Einheiten erfassen und danach den Tempomat der einzelnen Antriebe so regeln, daß die horizontalen Kräfte zwischen den Fahrzeug-Einheiten die festgelegten Grenzwerte nicht überschreiten.

9. Lenk- und Steuerungssystem nach Anspruch 1, dadurch gekennzeichnet, daß Fahrzeug-Einheiten mit stark geneigten Stirnseiten und dazu deckungsgleichen Heckpartien so ausgebildet sind, daß die in der Kurvenfahrt erforderliche elastische Übergangsverbindung (46) senkrecht über dem Drehpunkt (19) der Kopplungsarme verläuft und mit dem Anschlußheck (47) Bestandteil der Heckpartie (48) ist.

10. Lenk- und Steuerungssystem nach Anspruch 1 und 2, dadurch gekennzeichnet, daß bei zweiteiligen Fahrzeug-Einheiten der hintere Radsatz (8) für ein Mitlenken zu dem vorderen Radsatz (5) ausgebildet ist.

11. Lenk- und Steuerungssystem nach Anspruch 1 und 10, dadurch gekennzeichnet, daß bei vergleichbarem Abstand vom Knickpunkt (19) der Fahrzeug-Einheit zu den lenkbaren Radsätzen (5 und 8) die Fahrzeugteile (3 und 4) nicht aus der neutralen Kurvenlinie ausweichen.

## Claims

1. Steering and control system for multi-unit, non-railborne, automatically couplable and uncouplable trains, where the individual vehicle units (1, 2, 3, 4) are joined to one another by laterally spaced, path-regulating arms, and the direction of travel of the vehicle unit preceding the path-regulating arms (15/16, 25/26) is determined by the reciprocally controllable stroke of the path-regulating arms, and the regulation of the stroke takes place automatically according to the data relating to the stroke of the manually guided lead units (1) at the head of the train, the data relating to stroke being ascertained and stored via a computer and, employing the principle of computer-controlled tracker technology, being communicated to the following vehicle units, in the form of control pulses for their own path-regulating arms, at the position (31) of the route specified by the vehicle lead units.

2. Steering and control system according to claim 1, characterised in that the sequence of the path and angle values (27 and 28) specified by the path-regulating arms (14/15) of the vehicle lead units (1) is stored in a computer, isochronously with the values recorded by an accompanying wheel (20) measuring the distance travelled, for controlling the vehicle units downstream thereof.

3. Steering and control system according to claims 1 and 2, characterised in that the individual vehicle units are equipped with a wheel (20) for measuring the distance travelled, which records the sum of the preceding vehicle lengths as the distance travelled between its own particuar path-regulating arms and the path-regulating arms of the lead unit (1), and after travelling the associated length of the route retrieves the sequence of the path-regulating movements from the computer aboard the train's lead unit, in order to control its own particular vehicle unit.

4. Steering and control system according to claims 1, 2 and 3, characterised in that the data relating to the sequence of movements of the path-regulating arms are divided into short time intervals and are ascertained in conjunction with the isosynchronously travelled speed and after the vehicle lengths stored as the standing value have been travelled, the process control computer understands the banking profile of the vehicle units following and corrects a varying train speed.

5. Steering and control system according to claim 1, characterised in that the vehicle units consist of one-part and two-part locomotive units with a driver emplacement and a steerable set of wheels which is out of service when the vehicle units are travelling in the train, and that the double-axle or triple-axle sets of wheels are centrally arranged.

6. Steering and control system according to claims 1 and 5, characterised in that the vehicle units are in addition supported in the region of their end faces by wheel units adapted to be steered secondarily to a limited degree, in such a way as to exclude pitching movements by the vehicles, and that the automatic coupling of the vehicle units is made possible by the the wheel units (9) having a vertical lifting path.

7. Steering and control system according to claims 1, 5 and 6, characterised in that on the front end face the vehicle units have extensible coupling arms (25/26) and on the rear end face the corresponding coupling mouthpieces, and that the two elements are disposed on the lateral edges of the end faces in such a way that the swivelling motion of the coupled vehicle units is able to take place towards the inside of the curve with the sides of the vehicle in contact.

8. Steering and control system according to claims 1, 5, 6 and 7, characterised in that the coupling arms (25/26) are fitted with measuring gauges which when travelling as a train ascertain the tractive and compressive forces between the coupled vehicle units and accordingly regulate the rate of tempo of the individual drives in such way that the horizontal forces between the vehicle units do not exceed the limiting values that have been fixed.

9. Steering and control system according to claim 1, characterised in that vehicle units with steeply inclined front end faces and back ends congruent therewith are configured in such a way that the flexible coupling (46) needed for negotiating bends runs perpendicularly over the fulcrum (19) of the coupling arms and with the tail connection (47) forms part of the back end (48).

10. Steering and control system according to claims 1 and 2, characterised in that in the case of two-part vehicle units the rear set of wheels (8) is designed to be steered together with the front set of wheels (5).

11. Steering and control system according to claims 1 and 10, characterised in that given a comparable distance from the salient point (19) of the vehicle unit to the steerable sets of wheels (5 and 8), the vehicle parts (3 and 4) do not deviate from the neutral line of the bend.

## Revendications

1. Système de direction et de commande pour des formations de trains à éléments multiples non guidés, aptes à s'atteler et à se désatteler de manière automatique, dans lequel les unités de voitures individuelles (1, 2, 3, 4) sont reliées l'une à l'autre par des bras de levage disposés à l'écart l'un de l'autre en direction latérale, et le sens de la marche de l'unité de voiture mise en état de précontrainte par les bras de levage (14/15, 25/26) est déterminé par la course des bras de levage, apte à une commande alternative, la commande de la course de levage ayant lieu de manière automatique conformément aux données de course de levage des unités de têtes (1) guidées à la main et disposées en amont de la formation de train, dans lequel les données des courses de levage sont enregistrées et mémorisées par un ordinateur et sont transmises, conformément au principe de la technique de poursuite commandée par ordinateur, aux unités de voitures suivantes à la position sur la ligne (31) prédéfinie par les unités de têtes de voitures, sous la forme d'impulsions de commande pour les bras de levage propres.

2. Système de direction et de commande selon la revendication 1, caractérisé en ce que l'allure des valeurs de levage et d'angle (27 et 28) prédéfinies par les bras de levage (14/15) des unités de têtes de voitures (1) est mémorisée de manière synchrone avec les valeurs enregistrées par une roue rotative de mesure (20) de la distance parcourue, dans un ordinateur pour la commande des unités de voitures montées à la suite.

3. Système de direction et de commande selon les revendications 1 et 2, caractérisé en ce que les unités de voitures individuelles sont équipées d'une roue de mesure (20) de la distance parcourue qui enregistre la somme des longueurs des voitures montées en amont sous forme de distances parcourues entre les bras de levage respectivement propres et les bras de levage de l'unité de tête (1) et, après avoir parcouru la longueur de ligne correspondante, prélève l'allure des mouvements de levage pour la commande de l'unité de voiture propre à partir de l'ordinateur de l'unité de tête du train.

4. Système de direction et de commande selon les revendications 1, 2 et 3, caractérisé en ce que les données de l'allure de mouvement des bras de levage sont réparties en brefs intervalles de temps et sont enregistrées en liaison avec la vitesse isochrone en vigueur, et après avoir parcouru les longueurs de voitures mémorisées sous forme de valeur temporelle, l'allure des courbes des unités de voitures montées à la suite est reconstruite et une vitesse du train variable est corrigée par le processeur.

5. Système de direction et de commande selon la revendication 1, caractérisé en ce que les unités de voitures sont constituées par des unités automotrices à un seul élément ou à deux éléments comprenant un poste de conduite et un essieu monté orientable qui est mis hors-circuit en état de marche dans la formation du train, et en ce que les essieux montés du type à deux essieux ou du type à trois essieux sont disposés en position centrale.

6. Système de direction et de commande selon les revendications 1 et 5, caractérisé en ce que les unités de voitures sont en outre protégées dans la zone des côtés frontaux par des unités de roues directrices secondaires limitées de telle sorte que des mouvements de tangage de la voiture sont exclus et de telle sorte que l'attelage automatique des unités de voitures est rendu possible à l'aide d'une course de levage verticale des unités de roues (9).

7. Système de direction et de commande selon les revendications 1, 5 et 6, caractérisé en ce que les unités de voitures possèdent, sur leur côté frontal avant, des bras d'attelage (25/26) aptes à se déployer et, sur leur côté frontal arrière, les éléments d'ouverture d'attelage correspondants, en ce que les deux éléments sont disposés sur les arêtes latérales des côtés frontaux de telle sorte que le mouvement de pivotement des unités de voitures accouplées peut avoir lieu en direction du côté intérieur de la courbe lorsque les arêtes des voitures sont adjacentes.

8. Système de direction et de commande selon les revendications 1, 5, 6 et 7, caractérisé en ce que les bras d'attelage (25/26) sont équipés de boîtes de mesures hydrauliques qui enregistrent, lors de la marche de la formation, les forces de traction et de compression entre les unités de voitures accouplées et règlent par la suite la vitesse des moteurs individuels de telle sorte que les forces horizontales s'exerçant entre les unités de voitures ne dépassent pas les valeurs limites établies.

9. Système de direction et de commande selon la revendication 1, caractérisé en ce que les unités de voitures sont réalisées avec des côtés frontaux très inclinés et avec des parties arrières épousant la forme des premiers cités, si bien que la liaison de transmission élastique requise (46) lors de la négociation de virages s'étend perpendiculairement au centre de rotation (19) des bras d'attelage et fait partie intégrante de la partie arrière (48) avec l'arrière de raccordement (47).

10. Système de direction et de commande selon les revendications 1 et 2, caractérisé en ce que, dans le cas d'unités de voitures à deux éléments, l'essieu monté arrière (8) est réalisé pour obtenir un braquage conjoint avec l'essieu monté avant (5).

11. Système de direction et de commande selon les revendications 1 et 10, caractérisé en ce que, dans le cas d'une distance comparable entre le point d'inflexion (19) de l'unité de voiture et les essieux montés orientables (5 et 8), les éléments de voitures (3 et 4) ne s'écartent pas de la ligne courbe neutre.
